# EUROPÄISCHE PATENTANMELDUNG

(11) **EP 4 286 779 A1**
(43) Veröffentlichungstag der Anmeldung: **06.12.2023**
(21) Anmeldenummer: 23173911.1
(22) Anmeldetag: 17.05.2023
(51) Int. Cl.: F26B 13/00, F26B 21/02, F26B 21/04, F26B 25/00, H01M 4/04, F24F 8/108

(54) **ANLAGE ZUR TROCKENRAUMÜBERWACHUNG IM BEREICH EINER BATTERIEFERTIGUNG SOWIE VERFAHREN ZUR ÜBERWACHUNG DER KONZENTRATION AN SCHADSTOFFEN IN EINEM TROCKENRAUM FÜR EINE BATTERIEFERTIGUNG**

(30) Priorität: 01.06.2022 DE 102022001922
(71) Anmelder: Exyte Management GmbH, 70376 Stuttgart (DE)
(72) Erfinder: Hubalek, Karsten, 01237 Dresden (DE); Eberhardt, Klaus, 71665 Vaihingen/Enz (DE)
(74) Vertreter: Kohl, Karl-Heinz

(57) **Zusammenfassung**

Die Anlage zur Trockenraumüberwachung im Bereich einer Batteriefertigung weist mindestens einen Trockenraum (1) auf, in dem wenigstens eine Produktionsmaschine (5) untergebracht ist, in deren Bereich entstehende Schadstoffe abgesaugt und über wenigstens eine Abluftleitung (6) wenigstens einer Filtereinheit (11) zugeführt werden, die die Schadstoffe aus der Trockenluft filtert. Im Trockenraum (1) ist im Bereich der Produktionsmaschine (5) wenigstens eine Filter-Ventilator-Einheit (7) angeordnet, die einen Teilvolumenstrom (17) aus dem Bereich der Produktionsmaschine ansaugt, filtert und zumindest teilweise in den Trockenraum (1) zurückführt.

## Beschreibung

Die Erfindung betrifft eine Anlage zur Trockenraumüberwachung im Bereich einer Batteriefertigung nach dem Oberbegriff des Anspruches 1 sowie ein Verfahren zur Überwachung der Konzentration an Schadstoffen in einem Trockenraum für eine Batteriefertigung nach Anspruch 13.

Bei der Batteriefertigung, genauer der Zellfertigung, findet ein großer Teil der Produktion in Trockenräumen statt. Die Herstellung trockener Luft ist energetisch sehr aufwändig. Bei verschiedenen Prozessabschnitten kommt es zur Freisetzung von sehr giftigen Substanzen, z. B. Kobalt oder Nickel. Die Bearbeitung erfolgt auf Produktionsmaschinen, die sich im Trockenraum befinden und i.d.R. von gehäuseartigen Umkleidungen umgeben sind. Die bei der Bearbeitung entstehenden schädliche Schadstoffe werden aus der Umkleidung der Produktionsmaschinen abgesaugt und einer Filtereinheit zugeführt, mit der die in der Luft befindlichen Schadstoffe zurückgehalten werden. Die so gereinigte Abluft wird nach außen geführt.

Bei der Batteriefertigung halten sich die Mitarbeiter im Normalfall außerhalb der Umkleidung der Produktionsmaschine auf, befinden sich jedoch im Trockenraum. Während die Schadstoffkonzentration im Trockenraum i.d.R. keine Belastung für die Mitarbeiter darstellt, besteht eine weit größere Gefahr für die Mitarbeiter darin, dass Verschleppungen der Schadstoffe aus der Umkleidung der Produktionsmaschine in den Trockenraum auftreten können, wenn die Umkleidung beispielsweise für Wartungszwecke geöffnet oder kontaminierte Bauteile oder Fehlteile der Produktionsmaschine entnommen werden müssen.

Der Erfindung liegt die Aufgabe zugrunde, die gattungsgemäße Anlage und das Verfahren so auszubilden, dass die Schadstoffkonzentration im Trockenraum in energetisch günstiger Weise so gering gehalten werden kann, dass eine Gefährdung von im Trockenraum sich aufhaltenden Mitarbeitern nicht zu befürchten ist.

Diese Aufgabe wird bei der gattungsgemäßen Anlage erfindungsgemäß mit den kennzeichnenden Merkmalen des Anspruches 1 und beim Verfahren erfindungsgemäß mit den Merkmalen des Anspruches 13 gelöst.

Bei der erfindungsgemäßen Anlage ist im Bereich der Produktionsmaschine im Trockenraum wenigstens eine Filter-Ventilator-Einheit angeordnet. Sie entnimmt der Trockenluft einen Teilvolumenstrom aus dem Bereich der Produktionsmaschine. Dieser Teilvolumenstrom wird gefiltert und in den Trockenraum zumindest teilweise zurückgeführt. Befinden sich im Trockenraum mehrere Produktionsmaschinen, dann ist im Bereich jeder dieser Produktionsmaschinen vorteilhaft wenigstens eine solche Filter-Ventilator-Einheit vorgesehen. Mit ihnen wird jeweils ein Teilvolumenstrom der Trockenluft im Trockenraum entnommen, gefiltert und erneut in den Trockenraum zurückgeführt. Auf diese Weise wird gezielt im Bereich der Produktionsmaschine ein Teilvolumenstrom angesaugt und gereinigt.

Auf diese Weise lässt sich die Partikelkonzentration in dem Bereich, in dem sich der Mitarbeiter im Trockenraum aufhält, auf ein unschädliches Maß reduzieren. Die Filter-Ventilator-Einheit bildet eine Umluftfiltereinheit, die wenigstens ein Filterelement, vorzugsweise einen Schwebstofffilter, und wenigstens einen Ventilator aufweist. Mit ihm wird der Teilvolumenstrom aus der Trockenluft angesaugt, der mittels des Ventilators durch das Filterelement geleitet wird. Der Teilvolumenstrom tritt dann gereinigt wieder aus der Filter-Ventilator-Einheit in den Trockenraum aus.

Bei der Batteriefertigung haben die Filterelemente in der Filter-Ventilator-Einheit vorteilhaft die Filterklasse U15.

Die Filter-Ventilator-Einheit wird bevorzugst im Deckenbereich des Trockenraumes oberhalb der Produktionsmaschine und des Mitarbeiters installiert.

Erfindungsgemäß ist weiter vorgesehen, dass zur Überwachung der Schadstoffkonzentrationen zumindest in den kritischen Bereichen des Trockenraumes Probennahmeelemente angeordnet sind. Sie sind Teil einer Schadstoff-Überwachungseinheit, der ein Teilluftstrom über die Probennahmeelemente zugeführt wird. Die Probennahmeelemente sind örtlich den Filter-Ventilator-Einheiten zugeordnet, so dass gezielt in einzelnen Bereichen des Trockenraumes die Schadstoffkonzentration erfasst und ausgewertet werden kann.

Die Auswertung der Schadstoffkonzentration im jeweiligen örtlichen Bereich innerhalb des Trockenraumes wird vorteilhaft dazu herangezogen, die Umluftleistung der Filter-Ventilator-Einheiten anzupassen. Sollte beispielsweise die Schadstoffkonzentration in diesem örtlichen Bereich des Trockenraumes zu hoch sein, dann kann die Umluftleistung der in diesem Bereich angeordneten Filter-Ventilator-Einheit erhöht werden, um die Schadstoffkonzentration in diesem Bereich wieder auf einen ungefährlichen Wert zurückzuführen.

Die Probennahmeelemente sind vorteilhaft an eine Auswerteeinheit angeschlossen, die Teil der Schadstoff-Überwachungseinheit ist.

Die Probennahmeelemente sind vorteilhaft an einen Partikelzähler angeschlossen, der die im Teilluftstrom enthaltenen Schadstoffpartikel zählt. Vorteilhaft ist der Partikelzähler Teil der Auswerteeinheit.

Die Probennahmeelemente sind vorteilhaft an eine Messleitung angeschlossen, die mit der Auswerteeinheit strömungsverbunden ist. Über die Messleitung kann der Teilluftstrom, der vom jeweiligen Probennahmeelement aufgenommen wird, der Auswerteeinheit einfach zugeführt werden.

In der Messleitung sitzt vorteilhaft ein Schaltventil, mit dem die Messleitung geöffnet oder geschlossen werden kann. Das Ventil wird dann geöffnet, wenn über das Probennahmeelement ein Teilluftstrom der Trockenluft im Trockenraum entnommen werden soll.

Ist in bevorzugter Weise im Trockenraum eine Vielzahl von Probennahmeelemente angeordnet, dann ist jedes Probennahmeelement über jeweils eine Messleitung mit der Auswerteeinheit verbunden, wobei in jeder Messleitung ein solches Schaltventil sitzt. Mit Hilfe der Ventile ist es dann beispielsweise möglich, die Messleitungen gezielt nacheinander zu öffnen, so dass über die jeweiligen Probennahmeelemente ein Teilluftstrom aus der Trockenluft entnommen und in der Auswerteeinheit ausgewertet werden kann.

Vorteilhaft sind die Ventile an eine Steuerung angeschlossen, mittels der die Ventile nacheinander geöffnet bzw. geschlossen werden können. Mit Hilfe der Ventile ist sichergestellt, dass stets nur ein Probennahmeelement für einen Mess- und Auswertevorgang mit der Auswerteeinheit strömungsverbunden ist. Dadurch ist in einfacher Weise gewährleistet, dass die Schadstoffkonzentration in den den Probennahmeelementen zugeordneten Trockenluftsektoren zuverlässig auf einem ungefährlichen Niveau gehalten werden kann.

Das Probennahmeelement ist bei einer einfachen und kostengünstigen Ausbildung ein Rohr, das Eintrittsöffnungen für den Teilluftstrom der Trockenluft aufweist.

Die Auswerteeinheit kann bei einer vorteilhaften Ausbildung über wenigstens eine Leitung mit der Abluftleitung strömungsverbunden sind. Die aus der Auswerteeinheit austretende Abluft gelangt somit zusammen mit der von der Produktionsmaschine kommenden Abluft in die Filtereinheit, in der die Schadstoffe aus der Trockenluft herausgefiltert werden.

Die mittels der Filtereinheit gefilterte Luft wird vorteilhaft durch wenigstens eine Rückleitung in den Trockenraum zurückgeführt. Hierbei ist bevorzugt, die gesamte gereinigte Rückluft dem Trockenraum zuzuführen.

In bevorzugter Ausbildung ist an die Auswerteeinheit eine Anzeigeeinheit angeschlossen, mittels der das Ergebnis der Auswertung angezeigt werden kann. Das Auswerteergebnis kann auch beispielsweise ausgedruckt oder weitergeleitet werden.

Damit die Filter-Ventilator-Einheit einfach betätigt werden kann, ist sie in vorteilhafter Weise an eine Steuerung angeschlossen. Insbesondere wenn mehrere Filter-Ventilator-Einheiten vorgesehen sind, ist eine solche Steuerung besonders vorteilhaft. Sie ist dann so ausgebildet, dass die Filter-Ventilator-Einheiten unabhängig voneinander angesteuert werden können. Die Ansteuerung kann hierbei in Abhängigkeit vom Auswerteergebnis der Auswerteeinheit erfolgen. Ergibt die Auswertung, dass im erfassten Trockenraumsektor die Schadstoffkonzentration zu hoch ist, dann wird mittels der Steuerung die in diesem Trockenluftsektor befindliche Filter-Ventilator-Einheit so angesteuert, dass ihre Umluftleistung erhöht wird. Dann kann die erhöhte Schadstoffkonzentration wieder so weit gesenkt werden, dass sie unter einen vorgegebenen Grenzwert absinkt.

Beim erfindungsgemäßen Verfahren wird die Trockenluft aus dem Trockenraum der Filtereinheit zugeführt, welche die Schadstoffe aus der Trockenluft ausfiltert. Die gereinigte Luft wird dann als Rückluft zumindest teilweise, vorteilhaft jedoch vollständig, dem Trockenraum zurückgeführt. Mit den im Trockenraum befindlichen Probennahmeelementen wird zusätzlich der Trockenluft ein Teilluftstrom entnommen. Die Probennahmeelemente sind so angeordnet, dass sie innerhalb des Trockenraumes einzelne Trockenluftsektoren erfassen. Der Teilluftstrom wird dann hinsichtlich der Schadstoffkonzentration ausgewertet. Da nur ein Teilluftstrom entnommen wird, kann gezielt die Schadstoffkonzentration in kritischen Bereichen innerhalb des Trockenraumes erfasst werden. Solche kritischen Bereiche sind beispielsweise die Bereiche neben einer Produktionsmaschine, die sich im Trockenraum befindet.

Zur Aufnahme des Teilluftstromes lassen sich die Probennahmeelemente vorteilhaft gesteuert einschalten. So können die Probennahmeelemente in vorteilhafter Weise nacheinander eingeschaltet werden, so dass der der Auswerteeinheit zugeführte Teilluftstrom einem bestimmten Trockenluftsektor zugeordnet werden kann.

Eine vorteilhafte Verfahrensführung ergibt sich, wenn in Abhängigkeit vom Auswerteergebnis des Teilluftstromes im Bereich der Produktionsmaschine die Umluftleistung wenigstens einer Filter-Ventilator-Einheit eingestellt wird. Sie wälzt den Teilluftstrom im Bereich der Produktionsmaschine um und filtert sie dabei. Da auch die Filter-Ventilator-Einheiten einzelnen Sektoren des Trockenraums zugeordnet sind, kann die Schadstoffkonzentration für jeden Trockenluftsektor gezielt durch Ansteuerung der entsprechenden Filter-Ventilator-Einheiten eingestellt werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

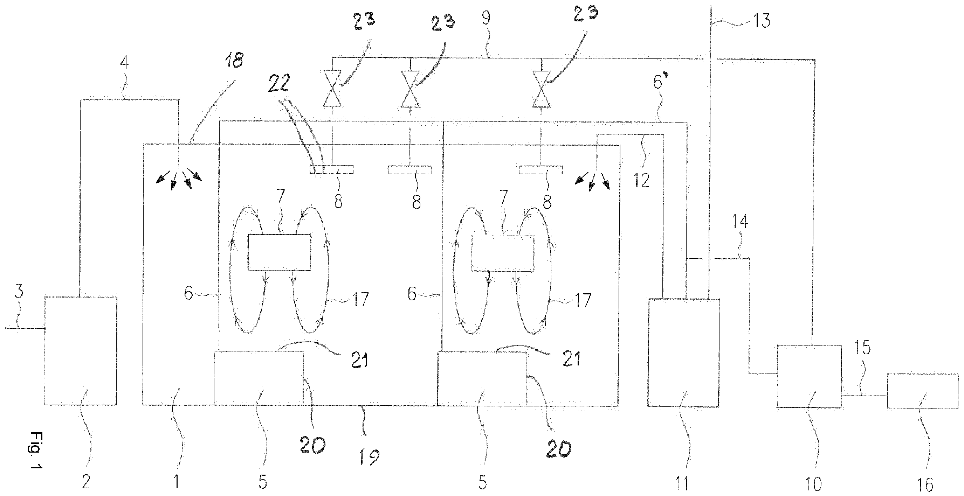

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in schematischer Darstellung eine erfindungsgemäße Anlage für eine Trockenraumüberwachung.

Die im Folgenden beschriebene Anlage dient zur Trockenraumüberwachung im Bereich der Batteriefertigung, genauer der Zellfertigung. In den Trockenraum 1 wird über wenigstens eine Trocknungseinheit 2 Frischluft 3 zugeführt, die nach dem Durchgang durch die Trocknungseinheit 2 über eine Leitung 4 als Trockenluft zugeführt wird. Die Leitung 4 mündet vorteilhaft in einem Deckenbereich 18 in den Trockenraum 1.

Im Trockenraum 1 befinden sich beispielhaft zwei Produktionsmaschinen 5, die vorteilhaft auf einem Boden 19 des Trockenraumes 1 stehen.

Die Produktionsmaschinen 5 sind jeweils in einer gehäuseartigen Umkleidung 20 untergebracht, die von Bedienpersonal durch eine (nicht dargestellte) Tür bei Bedarf betreten werden kann. Die in der Umkleidung 20 anfallenden Schadstoffe werden über die Leitungen 6 abgesaugt, die vorteilhaft an eine Decke 21 der Umkleidung 20 angeschlossen sind.

Die Leitungen 6 sind an eine gemeinsame Sammelleitung 6' angeschlossen, über welche die in dem Umkleidungen 20 entstehenden Schadstoffe zusammen mit der in der Umkleidung 20 befindlichen Luft abgesaugt und wenigstens einer Filtereinheit 11 zugeführt werden. Sie befindet sich im Bereich außerhalb des Trockenraumes 11 und dient dazu, die Schadstoffe aus der über die Sammelleitung 6' zugeführten Schadluft zu entfernen. Ein Teil oder auch die gesamte gereinigte Luft wird über wenigstens eine Rückleitung 12 dem Trockenraum 1 zugeführt. Vorteilhaft mündet die Rückleitung 12 im Deckenbereich 18 in den Trockenraum.

An die Filtereinheit 11 ist wenigstens eine Abluftleitung 13 angeschlossen, über die gereinigte Abluft beispielsweise über ein Dach des Trockenraumes nach außen abgegeben werden kann.

Im Trockenraum 1 sind im Bereich der Produktionsmaschinen 5 Filter-Ventilator-Einheiten 7 angeordnet, die bevorzugt im Deckenbereich 18 oberhalb der Produktionsmaschinen 5 installiert sind. Die Filter-Ventilator-Einheiten 7 sind Umluftfiltereinheiten mit wenigstens einem Filterelement und wenigstens einem Ventilator. Das Filterelement ist ein Schwebstofffilter, der im Bereich der Zellfertigung vorteilhaft die Qualitätsstufe U15 aufweist.

Die Filter-Ventilator-Einheiten 7 dienen dazu, im Trockenraum 1 einen Teilvolumenstrom im Bereich der jeweiligen Produktionsmaschine 5 anzusaugen, mit Hilfe des Filterelementes zu reinigen und anschließend wieder dem Trockenraum 1 im Bereich der Produktionsmaschine 5 zuzuführen.

Mit Hilfe der Filter-Ventilator-Einheiten 7 wird im Bereich der Produktionsmaschinen 5 eine Umluftströmung 15 erreicht.

In der Praxis sind die Produktionsmaschinen 5 im Trockenraum 1 verteilt angeordnet, wobei im Bereich jeder Produktionsmaschine 5 in der beschriebenen Weise wenigstens eine Filter-Ventilator-Einheit 7 zur Erzeugung der Umluftströmung 17 angeordnet ist. Mit den Filter-Ventilator-Einheiten 7 lässt sich der Umgebungsbereich der Produktionsmaschinen 5 gezielt erfassen und, sofern in diesem Bereich Schadstoffe auftreten sollten, von solchen Schadstoffen befreien.

Die in den Trockenraum 1 im Trockenbereich 18 zugeführte Trockenluft strömt in bekannter Weise turbulent nach unten, nimmt im Trockenraum vorhandene Schadstoffe auf und tritt im Bodenbereich aus dem Trockenraum 1 aus. Die belastete Trockenluft wird anschließend gefiltert, ggf. aufbereitet und wieder in den Trockenraum 1 zurückgeführt.

Im Trockenraum 1 sind im Deckenbereich 18 Messelemente 8 vorgesehen, die zur Probennahme der Trockenluft herangezogen werden. Die Messelemente 8 sind derart verteilt im Trockenraum 1 angeordnet, dass sie einzelne Sektoren des Trockenluftraumes erfassen. Beispielhaft deckt jedes Probennahmeelement 8 einen Sektor mit einer Größe von etwa 20m x 20m bis 30m x 30m ab. Je nach Zahl der im Trockenraum 1 befindlichen Produktionsmaschinen 5 bzw. Größe des Trockenraumes können die Probennahmeelemente 8 auch so positioniert sein, dass sie andere Sektorgrößen abdecken.

Die Probennahmeelemente 8 werden beispielhaft durch Rohre gebildet, die mit mehreren Eintrittsöffnungen 22 für die Trockenluft versehen sind. Sie sind vorteilhaft an der den Produktionsmaschinen 5 zugewandten Seite der Probennahmeelemente 8 vorgesehen.

Die Probennahmeelemente 8 sind jeweils an eine Messleitung 9 angeschlossen, welche die Probennahmeelemente 8 mit einer Partikel-Auswerteeinheit 10 verbindet.

In der Messleitung 9 jedes Probennahmeelementes 8 sitzt ein Ventil 23, mit dem es möglich ist, die Probennahmeelemente 8 wahlweise ein- oder abzuschalten.

Die Auswerteeinheit 10 ist über eine Signalleitung 15 an eine Anzeigeeinheit 16 angeschlossen, mit der die von der Auswerteeinheit 10 übersandten Signale angezeigt werden. Dies kann beispielsweise optisch oder durch einen Ausdruck erfolgen.

Die der Auswerteeinheit 10 über die Messleitung 9 mit Hilfe wenigstens einer (nicht dargestellter) Pumpe zugeführte Abluft wird vorteilhaft über eine Leitung 14 der Sammelleitung 6' zugeführt, wodurch sichergestellt ist, dass auch diese Abluft in der Filtereinheit 11 gereinigt und dem Trockenraum 1 über die Rückleitung 12 zurückgeführt werden kann.

Durch den Einsatz der Filter-Ventilator-Einheiten 7 wird die Partikelkonzentration in dem Bereich, in dem sich der Bediener der Produktionsmaschine 5 aufhält bzw. die Produktionsmaschine 5 sich befindet, wirkungsvoll reduziert werden. Aufgrund der örtlichen Zuordnung der Probennahmeelemente 8 und den entsprechenden Filter-Ventilator-Einheiten 7 kann auf diese Weise bedarfsgerecht gezielt in kritischen Bereichen die Reinigungsleistung überwacht und beeinflusst werden. Sollte mittels der Auswerteeinheit 10 festgestellt werden, dass die Schadstoffkonzentration im Umgebungsbereich der jeweiligen Produktionsmaschine 5 einen zulässigen Wert überschreitet, dann kann die Umluftleistung der Filter-Ventilator-Einheiten 7 in diesem Bereich so erhöht werden, dass die Schadstoffkonzentration unterhalb des zulässigen Grenzwertes liegt. Dies ist insbesondere dann erforderlich, wenn eine Bedienperson, z.B. für eine Wartung der Produktionsmaschine, die Umkleidung 20 der Produktionsmaschine betreten muss. Dann kann durch die Erhöhung der Umluftleistung sichergestellt werden, dass der Bediener nicht gefährdet ist.

Die Umluftleistung kann durch eine entsprechende Drehzahlsteuerung bzw. -regelung der Ventilatoren der Filter-Ventilator-Einheiten 7 eingestellt werden. Auch kann die Umluftleistung der die Trockenluft im Trockenraum 1 fördernden (nicht dargestellten) Ventilatoren gesteuert werden.

Die Ventilatoren werden in Abhängigkeit vom Messergebnis der Auswerteeinheit 10 angesteuert, so dass eine automatische Anpassung der Ventilatordrehzahl an das von der Auswerteeinheit 10 gelieferte Messergebnis möglich ist.

Die Probennahmeelemente 8 werden nacheinander zugeschaltet, indem das entsprechende Ventil 23 geöffnet wird. Dann kann ein Teil der Trockenluft als Teilluftstrom über das entsprechende Probennahmeelement 8 und der Messleitung 9 der Auswerteeinheit zugeführt werden. Dadurch ist eine einfache Lokalisierung desjenigen Bereiches im Trockenraum 1 möglich, der eine zu hohe Schadstoffkonzentration aufweist.

Um eine schnelle Erfassung der Schadstoffbelastung zu ermöglichen, wird in der Messleitung 9 vorteilhaft eine Strömungsgeschwindigkeit von > 15 m/s angestrebt.

Bei einer vorteilhaften Verfahrensführung werden die Probennahmeelemente 8 zyklisch nacheinander beispielsweise etwa 100 bis 150 sec mit einer Messdauer von beispielsweise etwa 60 sec überwacht. Auf diese Weise ist eine zuverlässige sektorweise Überwachung der Schadstoffbelastung im Trockenraum 1 sichergestellt.

Im Trockenraum 1 können zusätzlich weitere Parameter überwacht werden, wie beispielsweis die Temperatur, der Feuchtigkeitsgehalt, der C02-Anteil, der O2-Anteil und dgl. Hierfür sind sektorförmig entsprechende Sensoren vorgesehen, deren Signale vorteilhaft der Auswerteeinheit 10 oder auch einer gesonderten Auswerteeinheit zugeführt werden. Dann können auch diese weiteren Parameter überwacht und gesteuert bzw. geregelt werden.

Wird eine erhöhte Schadstoffkonzentration festgestellt, dann erfolgt über die Anzeigeeinheit 16 eine Warnung der Mitarbeiter. Gleichzeitig wird die Umluftleistung der Filter-Ventilator-Einheiten 7 erhöht und die Abluftmenge, die dem Trockenraum 1 entnommen wird, erhöht.

Da die Filter-Ventilator-Einheiten 7 im Trockenraum 1 im Bereich der Produktionsmaschinen 5 angeordnet sind, werden im Gefahrenfalle vorteilhaft nur diejenigen Ventilatoren der Filter-Ventilator-Einheiten 7 angesteuert, in denen die Schadstoffkonzentration einen erhöhten Wert aufweist. Die Ventilatoren der anderen Filter-Ventilator-Einheiten 7 werden in diesem Falle nicht angesteuert.

Der beschriebene Aufbau der Anlage sowie die beschriebene Verfahrensführung ermöglichen es, gezielt in einzelnen Sektoren des Trockenraumes die Umluftleistung der Filter-Ventilator-Einheiten 7 zu verringern, wenn in diesem Sektorbereich die Schadstoffkonzentration deutlich unterhalb eines vorgegebenen Grenzwertes liegt. Auf diese Weise ist eine energiesparende und damit kostengünstige Verfahrensweise möglich.

Der Regelbereich der Filter-Ventilator-Einheiten 7 kann aus Sicherheitsgründen zwischen zwei einstellbaren Betriebsprodukten Min und Max im gesamten überwachten Sektor geregelt werden. In einem Sektor können nicht nur eine, sondern mehrere Filter-Ventilator-Einheiten 7 vorgesehen sein. In diesem Falle werden sämtliche Filter-Ventilator-Einheiten 7 desjenigen Sektors geregelt, in dem eine erhöhte Schadstoffkonzentration gemessen worden ist. Dadurch werden Querströmungen zwischen den Filter-Ventilator-Einheiten in diesem Sektor vermieden.

Um Probleme oder Gefahren in angemessener Zeit zu erfassen, sollte die Antwortzeit der Auswerteeinheit 10 kleiner etwa 240 s sein. Um eine solche kurze Antwortzeit zu erreichen, sollte ein Mindestluftwechsel in der Größenordnung von etwa 20 I/h vorgenommen werden. Diese Angaben sind nur beispielhaft zu verstehen. Je nach Anwendungsfall können auch andere Werte vorgesehen sein. So kann beispielsweise für den Mindestluftwechsel auch ein höherer Wert als 20 l/h vorgesehen sein.

Im beschriebenen Ausführungsbeispiel sind die Probennahmeelemente 8 so im Trockenraum 1 ausgebildet und/oder angeordnet, dass gleich große Sektoren überwacht und erfasst werden. Es ist grundsätzlich möglich, die Probennahmeelemente 8 so anzuordnen, dass mit ihnen unterschiedlich große Sektoren im Trockenraum 1 erfasst werden. Dies ist beispielsweise dann möglich, wenn im Trockenraum Produktionsmaschinen 5 vorhanden sind, an denen unterschiedliche Schadstoffbelastungen auftreten können.

Die Probennahmeelemente 8 sind vorteilhaft so verteilt angeordnet, dass die von ihnen überwachten und erfassten Sektoren aneinander anschließen. In diesem Fall ist der gesamte Trockenraum 1 in die Sektoren unterteilt.

Bevorzugt sind die Sektoren gleich groß. Je nach Einsatzfall ist es möglich, dass die Sektoren unterschiedlich groß sind.

Die Auswerteeinheit 10 enthält einen Partikelzähler mit integrierter Pumpe, mit dem die Partikel gezählt werden, die sich in der von der Messleitung 9 zugeführten Abluft befinden. Der Partikelzähler sendet über die Signalleitung 15 entsprechende Signale an die Anzeigeeinheit 16, die in beschriebener Weise diese Signale auswertet.

Die Anzeigeeinheit 16 kann Teil einer Steuerung sein, mit der in Abhängigkeit vom Messergebnis die Ventilatoren der Filter-Ventilator-Einheiten 7 gesteuert bzw. geregelt werden.

Die Überwachung des Trockenraumes im Hinblick auf für die Bediener der Produktionsmaschinen 5 gefährliche Schadstoffe lässt sich in der beschriebenen Weise kostengünstig und unter nur geringem Energieaufwand optimal durchführen. Die kritischen Bereiche innerhalb des Trockenraumes können gezielt erfasst und behandelt werden. Unkritische saubere Bereiche im Trockenraum 1 können temporär oder auch dauerhaft in Bezug auf die Umluftleistung angepasst werden. Dabei kann der Verbrauch an Trockenluft geringehalten werden. Über die Frischluftleitung 3 wird stets nur so viel Frischluft von außen zugeführt, wie über die Abluftleitung 13 der Filtereinheit 11 nach außen abgeführt wird.

## Patentansprüche

1. Anlage zur Trockenraumüberwachung im Bereich einer Batteriefertigung, mit mindestens einem Trockenraum (1), in dem wenigstens eine Produktionsmaschine (5) untergebracht ist, in deren Bereich entstehende Schadstoffe abgesaugt und über wenigstens eine Abluftleitung (6) wenigstens einer Filtereinheit (11) zugeführt wird, die die Schadstoffe aus der Trockenluft filtert,
**dadurch gekennzeichnet, dass** im Trockenraum (1) im Bereich der Produktionsmaschine (5) wenigstens eine Filter-Ventilator-Einheit (7) angeordnet ist, die einen Teilvolumenstrom (17) aus dem Bereich der Produktionsmaschine (5) ansaugt, filtert und in den Trockenraum (1) zurückführt.

2. Anlage, insbesondere nach Anspruch 1,
**dadurch gekennzeichnet, dass** zur Überwachung von Schadstoffkonzentrationen zumindest in kritischen Bereichen des Trockenraumes (1) Probennahmeelemente (8) angeordnet sind, die Teil einer Schadstoff-überwachungseinheit sind.

3. Anlage nach Anspruch 1 oder 2,
**dadurch gekennzeichnet, dass** die Probennahmeelemente (8) an eine Auswerteeinheit (10) angeschlossen sind.

4. Anlage nach einem der Ansprüche 1 bis 3,
**dadurch gekennzeichnet, dass** die Probennahmeelemente (8) an einen Partikelzähler angeschlossen sind.

5. Anlage nach einem der Ansprüche 1 bis 4,
**dadurch gekennzeichnet, dass** die Probennahmeelemente (8) in einer Messleitung (9) liegen, die mit der Auswerteeinheit (10) strömungsverbunden ist.

6. Anlage nach einem der Ansprüche 1 bis 5,
**dadurch gekennzeichnet, dass** in der Messleitung (9) ein Ventil (23) sitzt, mit dem die Messleitung (9) geöffnet oder geschlossen werden kann.

7. Anlage nach einem der Ansprüche 1 bis 6,
**dadurch gekennzeichnet, dass** das Probennahmeelement (8) ein Rohr ist, das Eintrittsöffnungen (22) für einen Teilluftstrom der Trockenluft aufweist.

8. Anlage nach einem der Ansprüche 1 bis 7,
**dadurch gekennzeichnet, dass** die Auswerteeinheit (10) über wenigstens eine Leitung (14) mit der Abluftleitung (6) strömungsverbunden ist.

9. Anlage nach einem der Ansprüche 1 bis 8,
**dadurch gekennzeichnet, dass** die Filtereinheit (11) wenigstens eine in den Trockenraum (1) mündende Rückleitung (12) aufweist.

10. Anlage nach einem der Ansprüche 1 bis 9,
**dadurch gekennzeichnet, dass** an die Auswerteeinheit (10) eine Anzeigeeinheit (16) angeschlossen ist.

11. Anlage nach einem der Ansprüche 1 bis 10,
**dadurch gekennzeichnet, dass** die Filter-Ventilator-Einheit (7) an eine Steuerung angeschlossen ist.

12. Verfahren zur Überwachung der Konzentration an Schadstoffen in einem Trockenraum (1) für eine Batteriefertigung, bei dem im Trockenraum (1) mittels wenigstens einer Produktionsmaschine (5) eine Bearbeitung vorgenommen wird, bei der Schadstoffe entstehen, die mit Trockenluft wenigstens einer Filtereinheit (11) zugeführt werden, welche die Schadstoffe aus der Trockenluft ausfiltert, die als Rückluft wenigstens teilweise dem Trockenraum (1) zurückgeführt wird, wobei im Trockenraum (1) Probennahmeelemente (8) angeordnet sind, die einzelnen Trockenluftsektoren zugeordnet sind und die vom jeweiligen Trockenluftsektor einen Teilluftstrom entnehmen, der zumindest hinsichtlich der Schadstoffkonzentration ausgewertet wird.

13. Verfahren nach Anspruch 12,
**dadurch gekennzeichnet, dass** die Probennahmeelemente (8) zur Aufnahme des Teilluftstroms getrennt einschaltbar sind.

14. Verfahren nach Anspruch 12 oder 13,
**dadurch gekennzeichnet, dass** in Abhängigkeit vom Auswerteergebnis des Teilluftstromes im Bereich der Produktionsmaschine (5) die Umluftleistung wenigstens einer Filter-Ventilator-Einheit (7) eingestellt wird, die einen Teilluftstrom im Bereich der Produktionsmaschine (5) umwälzt und dabei filtert.
